# EUROPEAN PATENT APPLICATION

(11) **EP 1 852 925 A1**
(43) Date of publication of application: **07.11.2007**
(21) Application number: 06728578.3
(22) Date of filing: 23.02.2006
(51) Int. Cl.: H01M 2/10

(54) **BATTERY PACK**

(30) Priority: 25.02.2005 JP 2005050905
(71) Applicant: TOYOTA JIDOSHA KABUSHIKI KAISHA, Toyota-shi, Aichi-ken, 471-8571 (JP)
(72) Inventor: WATANABE, Ko, , Toyota-shi, Aichi, 4718571 (JP); OYANAGI, Hajime, , Toyota-shi, Aichi, 4718571 (JP)
(74) Representative: TBK-Patent
(86) International application number: PCT/JP2006/303933
(87) International publication number: WO 2006/090904

(57) **Abstract**

In a battery pack, battery pack flange portions (11a) are provided at opposing sides of a battery assembly (10A) along a stacking direction of battery modules (11A), so as to project laterally. The battery module flange portions (11a) are interposed between an upper case flange portion (3 a) and a lower case flange portion (4a) when the upper case flange portion (3 a) and the lower case flange portion (4a) are overlaid, and fastened and fixed concurrently by bolts (33). The bolts (33) are also used in fixing the battery pack (1A) to a vehicle (100). With this configuration, a battery pack that can reduce assembly steps with the bolts and the like to improve efficiency in the fastening work can be provided.

## Description

### Technical Field

The present invention relates to a structure of a battery pack incorporated into a vehicle such as an electric vehicle.

### Background Art

In recent years, electric vehicles that employ a motor as a driving source, or what is called hybrid vehicles wherein a motor as a driving source and other driving source are combined, are put into practical use. Such a vehicle incorporates a battery for supplying electricity as energy to the motor. As such a battery, for example a secondary battery represented by a nickel-cadmium battery, a nickel-hydrogen battery, a lithium ion battery and the like that can repeatedly be charged and discharged are used.

A secondary battery is constituted of battery modules in which battery cells are stacked. The battery modules are stored inside a battery case, and in this state, incorporated into a vehicle. This battery case and the battery modules together with other internal components stored inside the battery case are referred to as a battery pack.

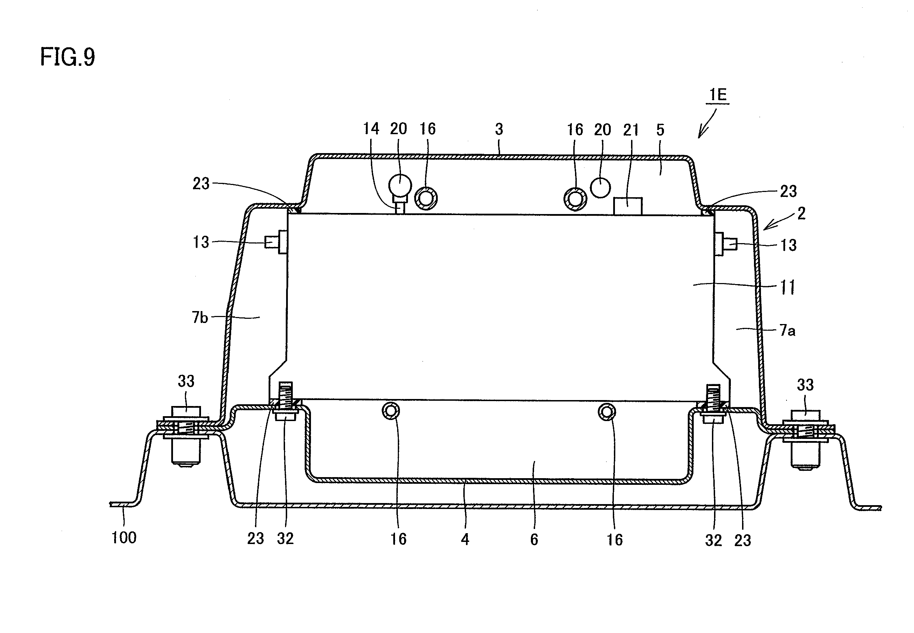

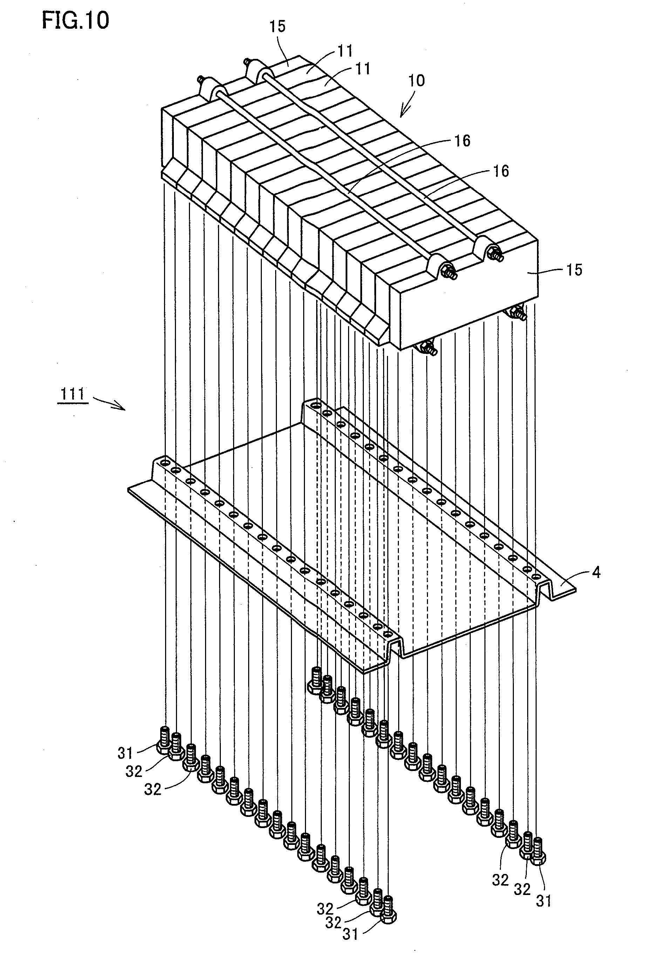

Fig. 9 is a schematic cross-sectional view of a battery pack 1E of a conventional technique. Fig. 10 is a schematic exploded view showing an assembly structure of battery pack 1E shown in Fig. 9. As shown in Fig. 9, battery pack 1E includes a battery case 2 constituted of an upper case 3 and a lower case 4, and a battery assembly 10 (see Fig. 10) arranged inside battery case 2. Battery assembly 10 is constituted of a plurality of stacked battery modules 11.

As shown in Fig. 9, an upper space 5 is provided at an upper portion of battery assembly 10, while a lower space 6 is provided at a lower portion of battery pack 1E. At side portions of battery pack 1E, a right side space 7a and a left side space 7b are provided. At an upper portion of battery assembly 10, an evacuation terminal 14 for externally evacuating gas such as hydrogen gas discharged from the inside of battery modules 11 is provided. In upper space 5, an evacuation hose 20 connected to evacuation terminal 14 for guiding gas discharged from evacuation terminal 14 to the outside of battery pack 1E is provided. A temperature sensor 21 for detecting the temperature of battery assembly 10 is provided on the top surface of battery assembly 10. Terminals 13 for charging and discharging battery modules 11 are provided at the sides of battery modules 11. Terminals 13 are connected by a not-shown bus bar.

As shown in Fig. 10, at both ends of battery assembly 10 in the stacking direction, end plates 15 as end members are arranged. By coupling end plates 15 by restraining pipes 16, stacked battery modules 11 are restrained in the stacking direction. This restraint by end plates 15 and restraining pipes 16 is performed in order to achieve an object of maintaining the stacked state of battery assembly 10 by fixing battery modules 11, and an object of providing a prescribed strength to battery assembly 10.

End plates 15 are fixed to lower case 4 by bolts 31. Battery modules 11 are fixed to lower case 4 by bolts 32. In fixing battery pack 1E to a vehicle 100, as shown in Fig. 9, bolts 33 for fastening upper case 3 and lower case 4 to each other are used.

Here, as shown in Fig. 10, battery assembly 10 is fixed to lower case 4 using a plurality of bolts 32, and the assembly work thereof is very cumbersome. As the insertion direction of bolts 32 is from the lower side of lower case 4, the work must be performed with lower case 4 being reversed. Further, after mounting battery assemble 10 to lower case 4, a work of fixing battery pack 1E to the vehicle is required. Thus, great many bolt assembling steps have been required in assembling battery pack 1E and fixing the same to the vehicle, which has been the factor of reducing the work efficiency.

Japanese Patent Laying-Open No. 2002-225570 discloses a structure wherein a plurality of battery modules are together mounted to a lower case. It employs a fixing structure where mounting of the upper case to the lower case and mounting of the battery pack itself to the vehicle are respectively attained with different bolts, and therefore the work efficiency in assembling the battery pack and in fixing it to the vehicle is not fully improved.

### Disclosure of the Invention

The problem to be solved by the present invention lies in that, in assembling a battery pack and in fixing the battery pack to a vehicle, great many bolt assembly steps are required and consequently the work efficiency is lowered. Accordingly, the present invention is made to provide a battery pack that can improve the efficiency in fastening works by greatly reducing steps of assembling with bolts and the like in assembling a battery pack and in fixing the battery pack to a vehicle.

A battery pack of the present invention is a battery pack that includes a battery assembly in which a plurality of battery modules are stacked and a battery case storing the battery assembly. The battery case has an upper case and a lower case. The upper case and the lower case have an upper case flange portion and a lower case flange portion, respectively, that project laterally. The upper case and the lower case are fixed to each other by overlaying the upper case flange portion and the lower case flange portion with each other and fastening and fixing the upper case flange portion and the lower case flange portion to each other using a fastening member. An interposed member is arranged between the upper case flange portion and the lower case flange portion. The interposed member arranged between the upper case flange portion and the lower case flange portion is fixed based upon the fastening and fixing of the upper case flange portion and the lower case flange portion by the fastening member, whereby the battery assembly is positioned and fixed inside the battery case.

With the battery pack according to the present invention, the interposed member arranged between the upper case flange portion and the lower case flange portion is fixed based upon the fastening and fixing of the upper case flange portion and the lower case flange portion by the fastening member, and the battery assembly is positioned and fixed inside the battery case. This makes it possible to concurrently achieve positioning and fixing of the battery assembly within the battery case and fastening and fixing of the upper case to the lower case. Further, it also becomes possible to perform the fastening work with the fastening member from the upper case side. As a result, the efficiency in the assembly work of the battery pack can be improved. Still further, since reduction in the number of fastening members can be realized, reduction in the material cost can be achieved.

### Brief Description of the Drawings

Fig. 1 is a schematic cross sectional view of a battery pack in a direction perpendicular to a stacking direction of battery modules employed for a battery pack of a first embodiment of the present invention.
Fig. 2 is an overall perspective view showing a structure of a battery assembly employed for the battery pack of the first embodiment of the present invention.
Fig. 3 is a schematic cross sectional view of a battery pack in a direction perpendicular to a stacking direction of battery modules employed for a battery pack of a second embodiment of the present invention.
Fig. 4 is an overall perspective view showing a structure of a battery assembly employed for the battery pack of the second embodiment of the present invention.
Fig. 5 is an overall perspective view showing a structure of a battery pack and a battery assembly of a third embodiment of the present invention.
Fig. 6 is a partial exploded perspective view showing a detailed structure of the battery assembly of the third embodiment of the present invention.
Fig. 7 is an overall perspective view showing a structure of a battery pack and a battery assembly of a fourth embodiment of the present invention.
Fig. 8 is a partial exploded perspective view showing a detailed structure of the battery assembly of the fourth embodiment of the present invention.
Fig. 9 is a schematic cross sectional view of a battery pack of a conventional technique.
Fig. 10 is a partial exploded perspective view showing a structure inside a battery pack.

### Best Modes for Carrying Out the Invention

In the following, each embodiment of a battery pack according to the present invention will be described referring to the drawings. The components identical to or corresponding to those of the battery pack described in the background technique above are provided with the identical reference characters, and description thereof is not repeated.

### (First Embodiment)

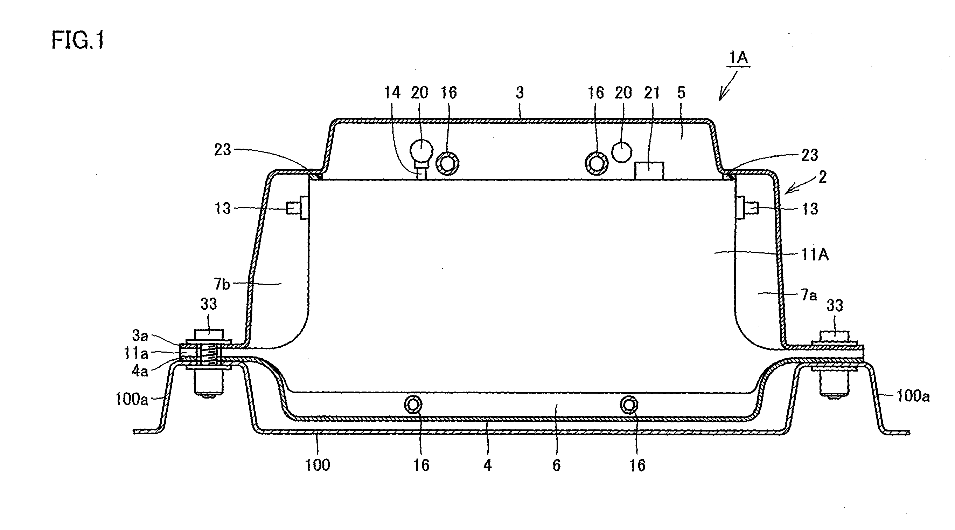

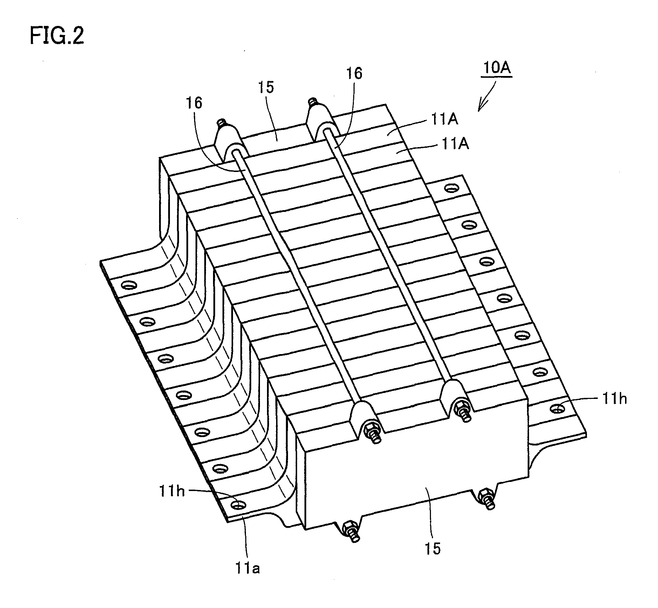

First, referring to Figs. 1 and 2, a battery pack of the present embodiment will be described. Fig. 1 is a schematic cross sectional view of battery pack 1A in a direction perpendicular to a stacking direction of battery modules 11A. Fig. 2 is an overall perspective view showing a structure of a battery assembly 10A of the first embodiment of the present invention. While battery module 11A of the present embodiment is shown as of nickel-cadmium battery type, other batteries such as nickel-hydrogen battery and the like can be employed.

Battery pack 1A of the present embodiment is a battery pack storing, inside a battery case 2, a battery assembly 10A in which a plurality of battery modules 11A are stacked. Battery case 2 has an upper case 3 and a lower case 4. Upper case 3 is provided with an upper case flange portion 3 a that projects laterally and that extends in the stacking direction (the direction perpendicular to the surface of Fig. 1) of battery modules 11A. Similarly, lower case 4 is provided with a lower case flange portion 4a that projects laterally and that extends in the stacking direction of battery modules 11A.

As shown in Fig. 2 in detail, battery assembly 10A of the present embodiment is provided with, as one exemplary interposed member, battery module flange portions 11a at opposing sides of battery assembly 10A along the stacking direction of battery modules 11A so as to project laterally. Battery module flange portions 11a provided at opposing sides of battery modules 11A are provided with fastening holes 11h. In the present embodiment, battery module flange portions 11a are provided with fastening holes 11h so that fastening holes 11h are arranged as staggered when battery assembly 10A is seen two-dimensionally, in order to improve efficiency in the fastening work. It is also possible to provide fastening holes 11h on both sides.

As shown in Fig. 1, battery module flange portion 11a is interposed between upper case flange portion 3 a and lower case flange portion 4a when overlaying upper case flange portion 3 a and lower case flange portion 4a, and fastened and fixed concurrently by bolts 33.

Further, in the present embodiment, bolts 33 used for fastening upper case flange portion 3 a, battery module flange portions 11a and lower case flange portion 4a are also used for fixing battery pack 1A to vehicle 100.

As above, with battery pack 1A of the first embodiment, battery module flange portions 11a arranged between upper case flange portion 3 a and lower case flange portion 4a are fixed based upon the fastening and fixing of upper case flange portion 3 a and lower case flange portion 4a by bolts 33, and the battery assembly 1A is positioned and fixed inside battery case 2. This makes it possible to concurrently achieve positioning and fixing of the battery assembly 1A within battery case 2 and fastening and fixing of upper case 3 to lower case 4. Further, it also becomes possible to perform the fastening work with the bolts from upper case 3 side. As a result, the efficiency in the assembly work of battery pack 1A can be improved.

Further, also when mounting battery pack 1A to a rail-like member 100a, which is provided to vehicle 100 and of which cross section is upwardly convex, fixing to rail-like member 100a using bolts 33 becomes possible. Therefore, the assembly work of battery pack 1A and mounting of battery pack 1A to rail-like member 100a can concurrently be performed, and the efficiency in the assembly work of battery pack 1A can further be improved.

### (Second Embodiment)

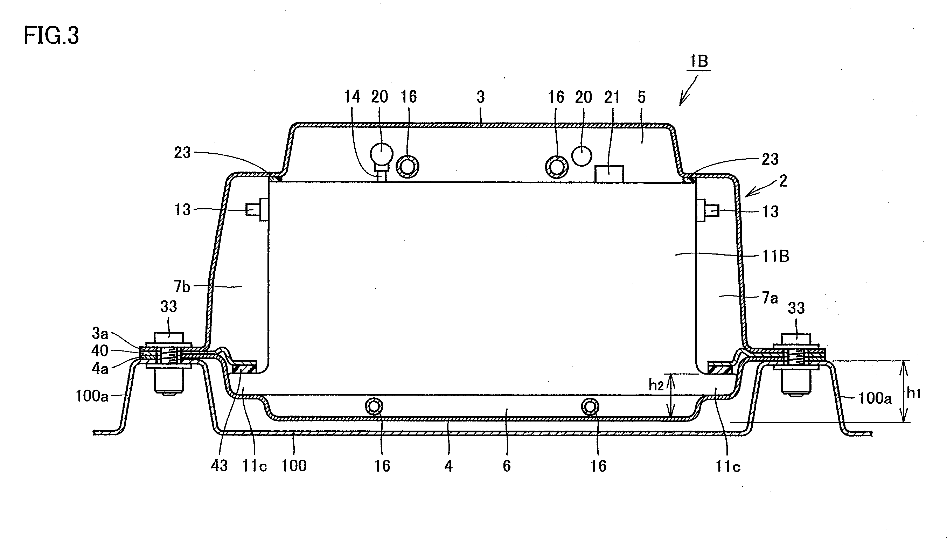

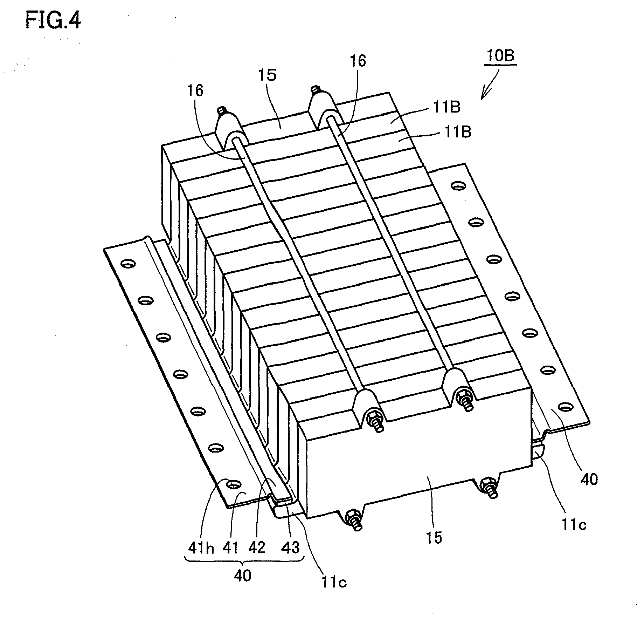

Next, referring to Figs. 3 and 4, a battery pack and a fixing structure of the battery pack of the present embodiment will be described. Fig. 3 is a schematic cross sectional view of battery pack 1B in the direction perpendicular to the stacking direction of battery modules 11B. Fig. 4 is an overall perspective view showing a structure of battery assembly 10B of the present embodiment. Battery modules 11B of the present embodiment are of nickel-cadmium battery type.

Comparing battery pack 1B of the present embodiment with battery pack 1A of the first embodiment, a difference lies in the fixing structure of battery modules 11B to battery case 2. Specifically, as to battery pack 1B of the present embodiment, similarly to the first embodiment, upper case 3 and lower case 4 are provided with upper case flange portion 3 a and lower case flange portion 4a extending in the stacking direction of battery modules 11B. Battery assembly 10B is provided with battery module projecting portions 11c provided to laterally project. As an interposed member, as shown in Fig. 4 in detail, a plate-like member 40 is provided so as to extend in the stacking direction of battery modules 11B.

Plate-like member 40 includes an interposed area 41 to be interposed between upper case flange portion 3 a and lower case flange portion 4a, and an abutment area 42 that abuts on the upper surface side of battery module projecting portion 11c for pressing battery assembly 10B toward lower case 4 side. Interposed area 41 is provided with fastening holes 41h with a prescribed pitch, while an elastic member 43 made of rubber, resin or the like is mounted to the lower surface side of abutment area 42. Between interposed area 41 and abutment area 42, a bent area curving upwardly is formed so as to provide plate-like member 40 with elastic force.

As shown in Fig. 3, in plate-like member 40, interposed area 41 is interposed between upper case flange portion 3 a and lower case flange portion 4a when overlaying upper case flange portion 3 a and lower case flange portion 4a, and fastened and fixed concurrently by bolts 33. Here, abutment area 43 abuts on the upper surface side of battery module projecting portion 11c, and presses battery assembly 10B toward lower case 4 side.

Further, in the present embodiment, bolts 33 used for fastening upper case flange portion 3 a, battery module flange portions 11a and lower case flange portion 4a are also used for fixing battery pack 1B to rail-like member 100a of vehicle 100.

As above, with battery pack 1B of the second embodiment, interposed area 41 of plate-like member 40 arranged between upper case flange portion 3 a and lower case flange portion 4a is fixed based upon the fastening and fixing of upper case flange portion 3a and lower case flange portion 4a by bolts 33, and abutment area 43 of plate-like member 40 presses battery module projecting portions 11c of battery assembly 1B to lower case 4 side. This makes it possible to concurrently achieve positioning and fixing of the battery assembly 1B within battery case 2 and fastening and fixing of upper case 3 to lower case 4. Further, it also becomes possible to perform the fastening work with the bolts from upper case 3 side. As a result, the efficiency in the assembly work of battery pack 1B can be improved. While it is necessary to form battery module flange portions 11a that greatly project laterally to battery module 11A in the first embodiment, the degree of projection in battery module projecting portions 11c of the present embodiment is small, and therefore the effect on the strength when formed with resin or the like can be reduced.

Further, also when mounting battery pack 1B to rail-like member 100a of vehicle 100, fixing to rail-like member 100a using bolts 33 becomes possible. Therefore, the assembly work of battery pack 1B and mounting of battery pack 1B to rail-like member 100a can concurrently be performed, and the efficiency in the assembly work of battery pack 1A can further be improved. Still further, as shown in Fig. 3, height h1 of rail-like member 100a from the bottom of lower case 4 is set to be higher than the upper surface position of battery module projecting portion 11c. Thus, even when external force is applied laterally to battery case 2, the area where plate-like member 40 abuts on battery module protruding portion 11c can be protected by rail-like member 100a.

### (Third Embodiment)

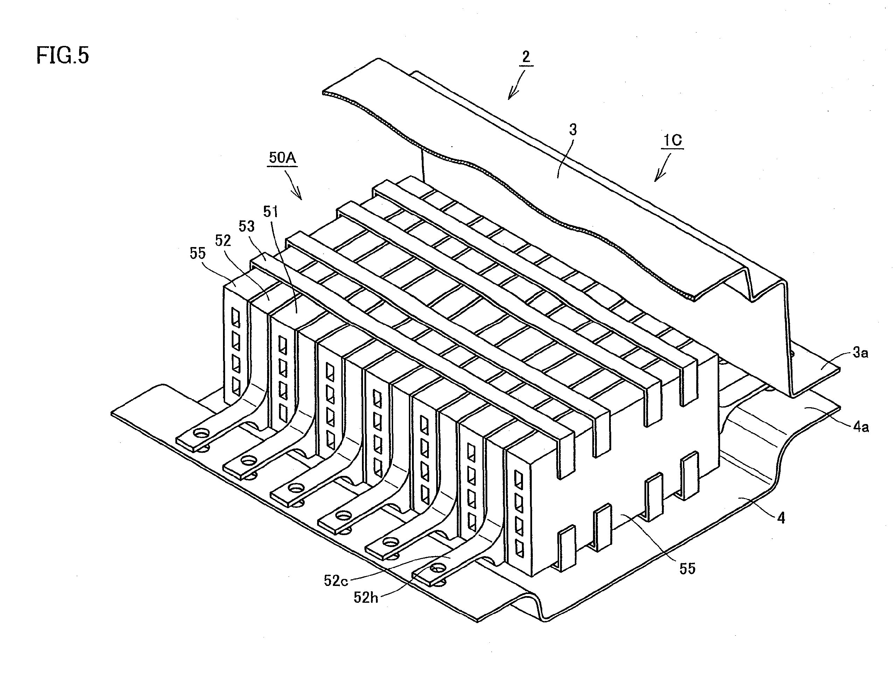

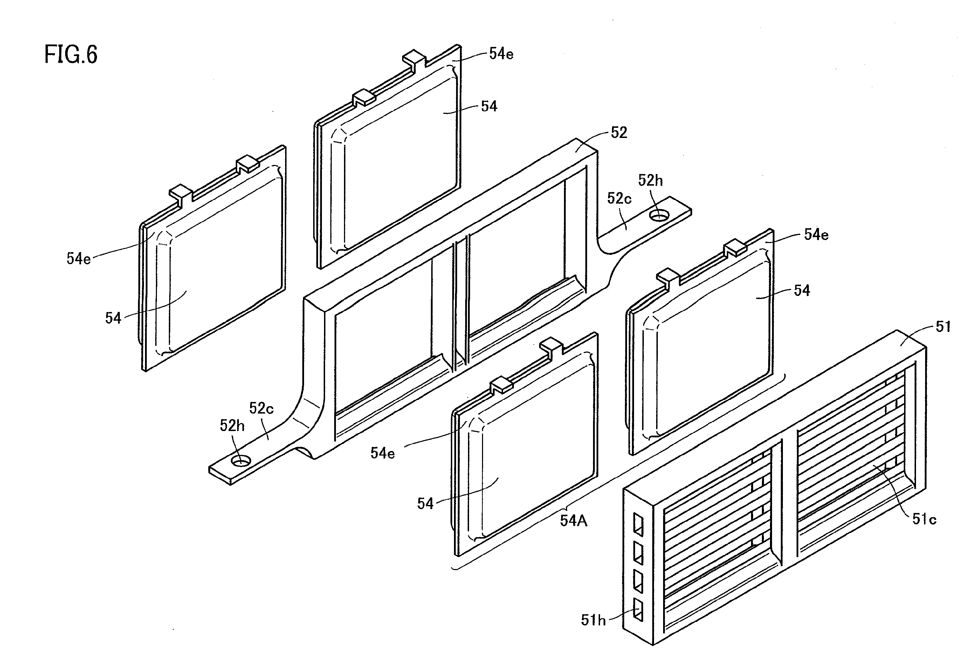

Next, referring to Figs. 5 and 6, a battery pack 1C of the present embodiment will be described. Fig. 5 is an overall perspective view showing a structure of battery pack 1C and battery assembly 50A of the present embodiment. Fig. 6 is a partial exploded perspective view showing a detailed structure of battery assembly 50A. Battery modules 54A (described later) of the present embodiment is of lithium-ion battery type.

Battery pack 1C of the present embodiment is a battery pack in which battery assembly 50A is stored inside battery case 2. Similarly to the above-described embodiments, battery case 2 has upper case 3 and lower case 4. Upper case 3 is provided with upper case flange portion 3a that laterally projects and that extends in the stacking direction of battery modules 54A (described later) constituting battery assembly 50A. Similarly, lower case 4 is provided with lower case flange portion 4a that laterally projects and that extends in the stacking direction of battery modules 54A.

As shown in Fig. 6, in battery assembly 50A, a plurality of lithium ion battery cells 54 having their electrodes covered by laminate films are stored as stacked. In the present embodiment, two lithium ion battery cells 54 are arranged in a lateral direction. These two lithium ion battery cells 54 are referred to as a battery module 54A. Each lithium ion battery cell 54 has a plurality of first frame bodies 51 and second frame bodies 52 which surround, at the side, a seal portion 55e of lithium ion battery cell 54 where a laminate film is welded. First frame body 51 prevents contact between adjacent lithium ion battery cells 54 and has a plurality of slit bars 51c for defining spaces that form cooling air passages for dissipating heat from lithium ion battery cell 15. At the side, openings 51h for passing the cooling air passages are provided. Second frame body 52 is arranged to surround the area where lithium ion battery cells 54 are arranged in contact with each other. In second frame body 52, similarly to the first embodiment, a battery module flange portion 52c is formed so as to project laterally, as an interposed member. Battery module flange portion 52c is provided with fastening holes 52h.

By stacking such configured first frame body 51, battery module 54A and second frame body 53 in order as shown in Fig. 5, arranging an end frame body 55 at each end and holding with restraining bands 14, the form of battery assembly 50A is maintained. Here, battery module flange portions 52c formed in second frame bodies 52 are positioned along the stacking direction of battery modules 54A. As above, with battery pack 1C of the third embodiment, the action and effect similar to that of the first embodiment can be attained.

### (Fourth Embodiment)

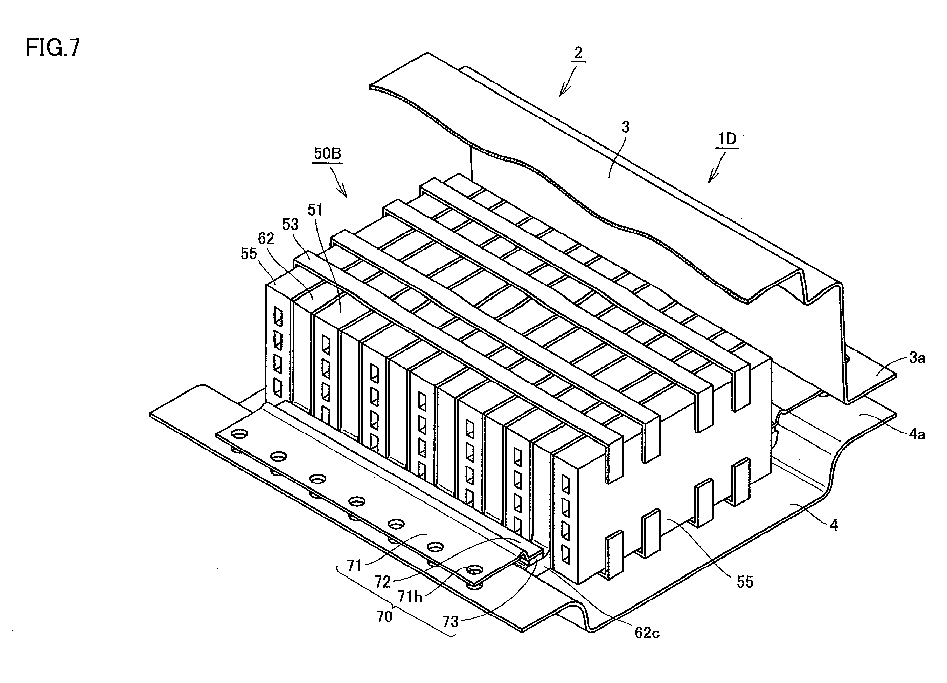

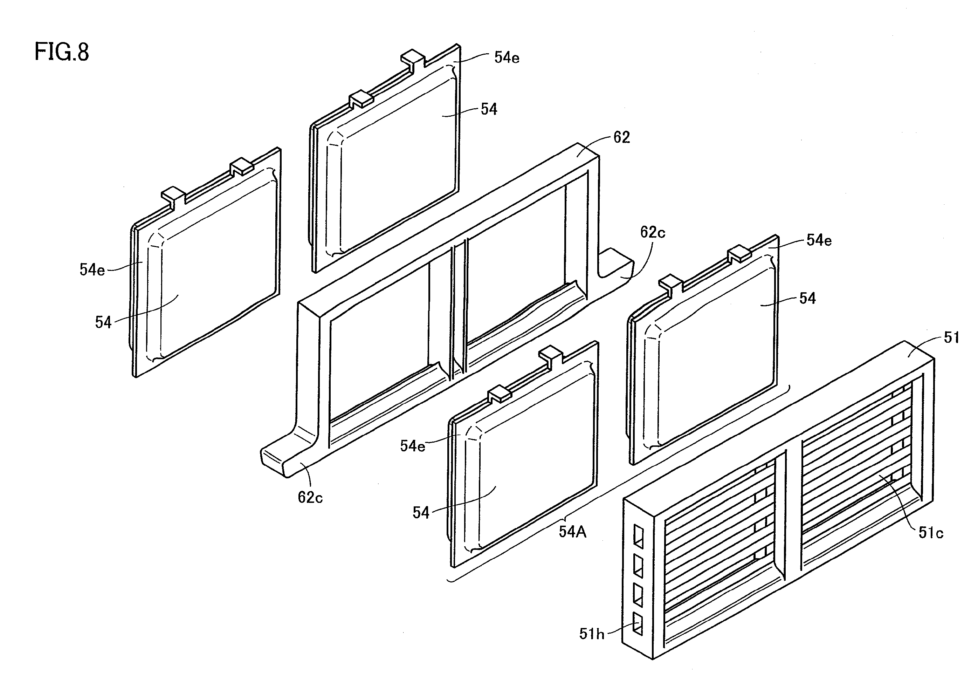

Next, referring to Figs. 7 and 8, a battery pack 1D of the present embodiment will be described. Fig. 7 is an overall perspective view showing a structure of battery pack 1D and battery assembly 50B of the present embodiment, and Fig. 8 is a partial exploded perspective view showing a detailed structure of battery assembly 50B. While the third embodiment is an application of battery assembly 50A of lithium ion battery type to the structure of the first embodiment, the present embodiment is an application of battery assembly 50B of lithium ion battery type to the structure of the second embodiment. Accordingly, in the following, differences from the third embodiment will be described and similar description will not be repeated. While the illustrated lithium ion battery is of laminate type, it may be of can type.

First, referring to Fig. 8, in second frame body 62 used in battery assembly 50B of the present embodiment, battery module projecting portions 62c are formed so as to laterally project, similarly to the second embodiment. As shown in Fig. 7, as an interposed member, a plate-like member 70 is provided so as to extend in the stacking direction of battery modules 54A.

Similarly to plate-like member 40 of the second embodiment, plate-like member 70 includes an interposed area 71 to be interposed between upper case flange portion 3a and lower case flange portion 4a, and an abutment area 72 that abuts on the upper surface side of battery module projecting portion 62c for pressing battery assembly 50B toward lower case 4 side. Interposed area 71 is provided with fastening holes 71h with a prescribed pitch, while an elastic member 73 made of rubber, resin or the like is mounted to the lower surface side of abutment area 72. Between interposed area 71 and abutment area 72, a bent area curving upwardly is formed so as to provide plate-like member 40 with elastic force. Thus, with battery pack 1D of the fourth embodiment also, the function and effect similar to that of battery pack 1C of the second embodiment can be attained.

In the embodiments described above, while the bolts according to the JIS standard that are commercially available have been disclosed as exemplary fastening members, other various fastening members can be employed. While description has been made on the cases where assembly of the battery pack and fixing to the vehicle are performed with common bolts, fixing to the vehicle can be performed by separately providing fastening holes in different position of the battery pack so as to fix the preassembled battery pack using different fastening member such as bolts.

Accordingly, the embodiments disclosed herein are illustrative and non-restrictive in every respect. The scope of the present invention is defined by the terms of the claims, rather than the description and example above, and is intended to include any modifications and changes within the scope and meaning equivalent to the terms of the claims.

## Claims

1. A battery pack, comprising:
a battery assembly (10A, 10B, 50A, 50B) in which a plurality of battery modules (11A, 11B, 54A) are stacked and a battery case (2) storing said battery assembly (10A, 10B, 50A, 50B), wherein
said battery case (2) has an upper case (3) and a lower case (4),
said upper case (3) and said lower case (4) have an upper case flange portion (3a) and a lower case flange portion (4a), respectively, that project laterally, said upper case (3) and said lower case (4) being fixed to each other by overlaying said upper case flange portion (3a) and said lower case flange portion (4a) with each other and fastening and fixing said upper case flange portion (3a) and said lower case flange portion (4a) to each other using a fastening member (33),
an interposed member (11a, 40, 52c, 70) is arranged between said upper case flange portion (3a) and said lower case flange portion (4a), and
said interposed member (11a, 40, 52c, 70) arranged between said upper case flange portion (3a) and said lower case flange portion (4a) is fixed based upon the fastening and fixing of said upper case flange portion (3a) and said lower case flange portion (4a) by said fastening member (33), whereby said battery assembly (10A, 10B, 50A, 50B) is positioned and fixed inside said battery case (2).

2. The battery pack according to claim 1, wherein
said upper case flange portion (3a) and said lower case flange portion (4a) are each provided so as to extend in a stacking direction of said battery modules (11A, 54A),
said interposed member is constituted of a battery module flange portion (1a, 52c) provided so as to project laterally to said battery assembly (10A) along the stacking direction of said battery modules (11A, 54A), and
said battery module flange portion (11a, 52c) is interposed between said upper case flange portion (3 a) and said lower case flange portion (4a), and fastened and fixed by said fastening member (33).

3. The battery pack according to claim 2, wherein
said fastening member (33) fastens said upper case (3), said interposed member (11a) and said lower case (4) to each other and, concurrently, to a vehicle (100) incorporating said battery pack, whereby said battery pack is fixed to said vehicle (100).

4. The battery pack according to claim 2, wherein
said battery assembly (50A) has a frame body (51, 52) that holds, on each opposing side, a seal portion (54e) formed at a periphery of said lithium ion battery (54), and
said interposed member (52c) is formed at said frame body (52).

5. The battery pack according to claim 4, wherein
said frame (51, 52) has a cooling air passage forming portion (51c, 51h) between stacked said battery modules (54A) for passing cooling air.

6. The battery pack according to claim 1, wherein
said upper case flange portion (3 a) and said lower case flange portion (4a) are each provided so as to extend in a stacking direction of said battery modules (11B, 54A),
said battery assembly (10B, 50B) has a battery module projecting portion (11c, 62c) provided so as to project laterally,
said interposed member is constituted of a plate-like member (40, 70) provided so as to extend in the stacking direction of said battery modules (11B, 54A), and
said plate-like member (40, 70) includes an area (41, 71) interposed between said upper case flange portion (3 a) and said lower case flange portion (4a) and an abutment area (43, 73) abutting on an upper surface side of said battery module projecting portion (11c, 62c) for pressing said battery assembly (10B, 50B) toward said lower case (4) side.

7. The battery pack according to claim 6, wherein
said fastening member (33) fastens said upper case (3), said interposed member (11a) and said lower case (4) to each other and, concurrently, to a vehicle (100) incorporating said battery pack, whereby said battery pack is fixed to said vehicle (100).

8. The battery pack according to claim 7, wherein
said vehicle (100) has a rail-like member (100a) of which cross section is upwardly convex, said battery pack being fixed to said rail-like member (100a) by said fastening member (33), and
a height of said rail-like member (100a) from a bottom surface of said lower case (4) is set to be higher than a position of an upper surface of said battery module projecting portion (11c, 52c).

9. The battery pack according to claim 6, wherein
said battery assembly (50A) has a frame body (51, 52) that holds, on each opposing side, a seal portion (54e) formed at a periphery of said lithium ion battery (54), and
said interposed member (52c) is formed at said frame body (52).

10. The battery pack according to claim 9, wherein
said frame (51, 52) has a cooling air passage forming portion (51c, 51h) between stacked said battery modules (54A) for passing cooling air.
